Europäisches Patentamt

European Patent Office

Office européen des brevets

(19)

(11) Publication number: 0 304 095
A2

# (12) EUROPEAN PATENT APPLICATION

(21) Application number: 88200691.9

(51) Int. Cl.⁴: **B01D 53/36** , **B01J 23/64** , **B01J 23/89**

(22) Date of filing: **13.06.85**

(30) Priority: **14.06.84 US 620415**
**31.01.85 US 696950**
**31.01.85 US 696947**

(43) Date of publication of application:
**22.02.89 Bulletin .89/08**

(60) Publication number of the earlier application in accordance with Art.76 EPC: **0 171 151**

(84) Designated Contracting States:
**AT BE CH DE FR GB IT LI LU NL SE**

(71) Applicant: **ENGELHARD CORPORATION**
**Menlo Park, CN 40**
**Edison New Jersey 08818(US)**

(72) Inventor: **Wan, Chung-Zong**
**10 Layne Road**
**Somerset New Jersey, 08873(US)**
Inventor: **Dettling, Joseph C.**
**8 Spicy Pond Road**
**Howell New Jersey, 07731(US)**
Inventor: **Jagel, Kenneth I.**
**Stanton Road P.O. Box 112**
**Stanton New Jersey, 08885(US)**

(74) Representative: **Fisher, Adrian John et al**
**CARPMAELS & RANSFORD 43 Bloomsbury Square**
**London WC1A 2RA(GB)**

(54) **Catalyst for treatment of exhaust gases.**

(57) A catalyst for oxidation of hydrocarbons and carbon monoxide in a gas stream comprises ceria, a platinum group catalyst, high surface area alumina and a p-type oxide dispersed on a refractory substrate, the p-type oxide being in other than bulk form, and a substantial proportion thereof being in intimate contact with the ceria. The p-type oxide may, for example, be nickel oxide, cobalt oxide, iron oxide, manganese oxide, or chromium oxide.

EP 0 304 095 A2

## CATALYST FOR TREATMENT OF EXHAUST GASES

This invention relates to a catalyst active at least for oxidation of hydrocarbons and carbon monoxide in an exhaust stream, and/or for reduction of oxides of nitrogen in a gas stream. More particularly, the invention relates to a catalyst of the type having ceria, a platinum group catalyst and high surface area alumina dispersed on a refractory substrate.

It is well known that when carbonaceous fuels are burned by conventional processes to produce power, for example, in reciprocating piston engines, rotary engines, turbines and the like, combustion is generally incomplete. The exhaust gases from these power producing systems contain a mixture of by-product pollutants including carbon monoxide, hydrocarbons (saturated and unsaturated) and oxides of nitrogen (often referred to as $NO_x$). Venting such exhaust gases to the atmosphere creates a serious air pollution problem. Elimination or substantial reduction of these undesirable by-products is thus seen to be extremely desirable.

The problem of substantially converting gaseous contaminants or pollutants in the exhaust gases of power producing systems to less harmful forms has been the subject of much research activity, especially in recent years. There are three principal gaseous pollutants which are of current interest, namely, unburned hydrocarbons, carbon monoxide and nitrogen oxides. Standards for all these components have been set by various governments which new automobiles are now required to meet. Until recently, adjustments to engine operating conditions have been sufficient to meet the standards. As these standards have become increasingly severe, it has been necessary to introduce new methods for removing or reducing the level of contaminants in the exhaust stream. Most recently, catalysts have been used to oxidize the unburned hydrocarbons and carbon monoxide.

The catalysts are usually placed in the exhaust line leading from the combustion zone and serve to promote reaction between free oxygen and uncombusted and partially combusted fuel components. The oxygen is typically derived from either a fuel-lean operation of the combustion zone in which case it will be inherently present in the exhaust gas or from an external air or other oxygen supply.

In practice, the catalysts are normally supported on relatively inert high surface area materials, usually of refractory metal oxide, typically gamma alumina, so that the catalyst metals can be highly dispersed to obtain large active surfaces. The term, gamma alumina, is used herein in accordance with the common parlance in the catalyst industry to include high surface area admixtures, typically over 60 $m^2$/g, preferably over 80 $m^2$/g, consisting essentially of the gamma and delta phases of alumina but also possibly including substantial amounts of the eta, kappa and theta phases.

A common deficiency associated with supported catalyst systems is thermal degradation of the catalyst support from extended exposure to high exhaust gas temperatures of power producing systems. In a moving vehicle for example, exhaust temperatures can reach 1,000° C, and such elevated temperatures cause the support material to undergo a phase transition with accompanying volume shrinkage, especially in the presence of steam, whereby the catalytic metal becomes occluded in the shrunken support medium with a loss of exposed catalyst surface area and a corresponding decrease in activity.

The stability of alumina support materials can be enhanced by admixing or combining a rare earth oxide, silicon dioxide, zirconia, or an alkaline earth oxide therewith. The presence of these oxide stabilizers retards the phase transition of higher surface area alumina to alpha alumina so that occlusion of the metal catalyst and resultant decreased catalytic activity is avoided. The amount of metal oxide combined with the alumina is about 0.05 to 30 weight percent, preferably about 01. to 25 weight percent, based on the composite weight. Among the alkaline earth metal oxides which may be used to stabilize alumina are those of barium, strontium, calcium and magnesium. Among the rare earth oxides which may be employed are those of cerium, lanthanum, neodymium, praseodymium, as well as commercially available mixtures of rare earths. The rare earth oxide is often cerium oxide. If a mixture of rare earths is used, the mixture is usually one in which cerium oxide is the predominant component.

In addition to stabilizing alumina support materials, ceria also has a beneficial effect on the catalytic conversion of hydrocarbon and carbon monoxide pollutants. Ceria is thought by some to serve as an oxygen storage component in the catalyst to effectively moderate the effects of the rapid changes between rich and lean exhaust stoichiometries. The effects of incorporating rare earth oxides, particularly ceria, is especially pronounced on oxidation of carbon monoxide. An amount of ceria as small as 0.5% by weight of the washcoat can result in a significant decrease in the amount of unconverted carbon monoxide.

The present invention is based on the discovery that the catalytic promoting effect of ceria can be further enhanced when a p-type oxide is in intimate contact with it.

According to the present invention, there is provided an improved catalyst active at least for oxidation of hydrocarbons and carbon monoxide in a gas stream, said catalyst being of the type having ceria, a platinum group catalyst and a high surface area alumina dispersed on a refractory substrate, wherein the improvement comprises: a p-type oxide being dispersed on said support, in other than bulk form, a substantial portion of said p-type oxide being in intimate contact with said ceria.

A p-type metal oxide may be conveniently defined as a metal oxide exhibiting increasing electroconductivity as the pressure of oxygen in equilibrium therewith is increased. P-type metal oxides are generally oxides of metals of the first transition metal series, e.g. cobalt, nickel, iron, manganese, and chromium, and the like, see for example, p. 13 Catalysis by Nonmetals, O.V. Krylov, Academic Press, New York, 1970. Nickel oxide is a typical p-type oxide for use in the practice of the present invention.

If the p-type oxide is applied to alumina prior to deposition of ceria on the alumina, the strong interaction between the p-type oxide and the alumina prevents the ceria and p-type oxide from being in the required intimate contact, and this circumstance should therefore be avoided. Also, p-type oxide in the bulk form, rather than promoting the catalytic activity of ceria, interferes with it so the presence of p-type oxide in the bulk form should similarly be avoided.

Inclusion of p-type metal oxide/cerium oxide composite particles and platinum is particularly advantageous in the practice of the present invention. Thus, in preparing the catalyst materials of the present invention, a metal compound which decomposes on calcination to a p-type metal oxide is deposited on the surface of cerium oxide particles. Optionally, the platinum may be deposited on the composite particles or impregnated on separate support particles, e.g. gamma alumina, or the composite particles may be fixed on the alumina. Thus, in preparing platinum containing catalyst components in accordance with the practice of the present invention, the platinum component may be a platinum/p-type oxide/ceria composite, a p-oxide/ceria composite in combination with platinum supported on ceria or alumina, or any of the individual platinum containing composites supported on alumina.

The preparation of the composite p-type metal oxide/cerium oxide composite component of the present invention may be accomplished by first preparing an aqueous solution of a soluble salt of the metal which can be converted to an oxide at the elevated temperatures used for drying and calcining in air, such salts including nitrate, acetate, formate, carbonate or other organic or inorganic water soluble salts. The cerium oxide powder can then be impregnated with the aqueous solution of soluble p-type oxide precursor preferably containing just enough water to completely saturate the powder. Thereafter, the powder is dried and calcined to prepare the p-oxide/cerium oxide composite or the p-type oxide precursor is fixed on the cerium oxide. Alternatively, the p-type oxide/cerium oxide composite may be prepared by co-precipitating p-type oxide and ceria from a solution containing both p-type oxide precursor and a cerium containing species. The precipitate then can be dried and calcined in air to form the composite. The resulting composite material can then be mixed, if desired, with a platinum containing component such as stabilized alumina impregnated with platinum or the platinum may be applied to the p-oxide/ceria composite directly, for example, by impregnating the composite with a platinum containing solution, and the composite may be treated to fix the platinum group metals on the composite. The platinum or palladium metal component/p-type metal oxide/cerium oxide composite can be admixed with alumina support particles and comminuted, i.e. reduced in size, as by ball milling. These dispersed alumina particles can then be formed into a washcoat which is then applied to a monolithic carrier and calcined at temperatures typically about 125° C - 500° C to yield the catalyst.

The ceria upon which the p-type metal oxides are deposited in accordance with the present invention need not be pure ceria, but may be mixed with the oxides of lanthanum, neodymium and praseodymium. Commercially available mixtures of rare earth oxides may also be used if they contain substantial amounts of ceria. If a mixture of rare earth metal oxides is used, the mixture is usually one in which cerium oxide is the predominant component.

It is advantageous to include a substantial portion of ceria in bulk form to promote oxidation and reduction reactions. It is also advantageous to include a substantial portion of ceria as colloidal ceria, particle size 20 A, such that a large geometric $CeO_2$ surface area to promote oxidation and reduction reactions can be obtained.

The catalysts may also contain other ingredients which may serve as additional promoters for oxidation and reduction reactions, e.g. manganese, vanadium, copper, iron, cobalt, chromium, zirconium, nickel, and the like. Such promoters include the various metal oxides and other compounds of the metals which can be converted into oxides under operating conditions.

Preferably, the catalyst composition of the present invention will include at least about 3%, more preferably 5%, and still more preferably 10%, by weight of rare earth oxide. The most preferred catalysts of the present invention will include at least 15% by weight of rare earth oxide.

In a particularly preferred embodiment of the present invention, the catalyst also comprises a catalyst

3

material which will selectively promote the reduction of nitrous oxides to nitrogen. Catalyst systems combined on a single bed which simultaneously promoted oxidation and reduction reactions to reduce the hydrocarbon, carbon monoxide and $NO_x$ content of exhaust gases are known to the art as three-way catalysts (TWC).

It has been determined that platinum-rhodium bimetallic and platinum-palladium-rhodium trimetallic compounds deposited on an alumina support are especially effective TWC's. Rhodium is of special interest since it is selective in reduction of $NO_x$ into innocuous nitrogen in the presence of excess air in the exhaust supplied to the catalyst.

Although the use of rare earth oxides is effective in providing stability to phase transition to gamma alumina, we have found that the incorporation of rare earth oxides, and specifically ceria in gamma alumina, deleteriously affects the catalytic activity of rhodium metal. Accordingly, if it is desired to incorporate rhodium in the catalysts of the present invention, at least a substantial proportion thereof should preferably be dispersed on particles having less than 0.5% rare earth oxide by weight. The alumina of such particles may be stabilized by other metal oxide stabilizers such as the alkaline earth metal oxides. Barium oxide is the preferred stabilizer for gamma alumina particles having rhodium dispersed thereon.

The deleterious effect of rare earth oxides on the catalytic activity of rhodium is more fully discussed in our EP-0171151, which describes and claims a three-way catalyst comprising rhodium dispersed on particles of gamma alumina, a rare earth oxide and a second platinum group metal comprising platinum and/or palladium being dispersed on particles of rare earth oxide, alumina and/or gamma alumina stabilised with rare earth oxide, characterised in that a substantial portion of the rhodium is dispersed on particles having less than 0.5% rare earth oxide by weight.

The catalysts of the present invention can be prepared as confined batches or beds of catalytically coated particulates which, in turn, may be generally spherical or of small pellet form, with nominal diameters and lengths in the 1.6 mm to 8.0 mm (1/16 inch to 5/16 inch) range. Preferably, however, the catalysts of the present invention can be manufactured and supplied as catalytically coated rigid skeletal monoliths, or honeycomb elements where there are a multiplicity of longitudinal passageways or cells in each unit in order to provide a large nominal surface area.

The spheres and pellets are of advantage as catalyst support material to the extent that they can be made from refractory inorganic oxides, typically of alumina, or of alumina with one or more other oxides as additives to help stabilize for strength, heat resistance, etc., such that they have surfaces with resulting high porosity and large resulting actual surface areas. On the other hand, pills and pellets are far more fragile than rigid, monolithic honeycomb elements and are more easily broken when placed in service on an auto or truck. Small spheres or pellets are especially subject to exhaust gas pulsations from the engine operation such that a breakage rate can be quite high for loosely packed beds of these rather fragile members. Rigid monolithic, honeycomb structures are typically made from ceramics which comprise refractory crystalline materials such as sillimanite, magnesium silicates, zircon, petalite, spodumene, cordierite, aluminosilicates, mullite, or combinations thereof, etc. Such materials, which are of varying compositions of silica, magnesia and alumina, are considered to have surface porosity; however, as heretofore noted, their surfaces are not highly porous to the same extent as obtained with a lower bulk density alumina pill or extrudate and, therefore, the individual catalyst metal compounds are impregnated on high surface area alumina and then coated on to the monolithic structure.

The manner in which rhodium and other platinum group metals are deposited on alumina support particles, forms a critical feature of preferred catalysts of the present invention.

Such catalysts are prepared by forming at least two different types of particles. The first type of particle comprises rhodium and, optionally, platinum and/or palladium, dispersed on high surface area alumina, which is substantially free of rare earth oxides. (As used herein, the term "rare earth oxide free particles" should be understood to mean particles having less than about 0.5% rare earth oxide by weight contained therein or dispersed on the surface thereof.) The second type of particle comprises platinum and/or palladium dispersed on either separate alumina particles which have ceria associated therewith or ceria particles or both.

After separate impregnation of the support particles, the separately impregnated support particles and optional rare earth oxide particles may be compacted and formed into pellets or spheres ready for use as catalysts for the conversion of pollutants in the exhaust gases of power vehicles. Alternatively, and preferably, the various particles are combined in a liquid medium such as water to provide a slurry which may be applied to a monolithic substrate as a washcoat. Thereafter the washcoated monolith is calcined to drive therefrom the liquid medium of the slurry and to leave on the monolith a dry, adherent coating comprised of rare earth free rhodium bearing support particles (optionally also bearing platinum and/or palladium) and rare earth containing particles, segregated from the rhodium bearing particles, but optionally bearing platinum and/or palladium dispersed thereon, the combined weight of platinum and palladium preferably being at least twice the weight of the rhodium.

The amount of cerium oxide which may be present in the catalyst washcoat compositions of the present invention may vary from about 1 to about 50 percent by weight and preferably about 5 to 30 percent by weight. The amount of p-type metal oxide deposited on bulk cerium oxide particles may vary from about 0.05 to about 20 percent by weight and preferably about 0.1 to about 10 percent by weight based on the total combined weight of the cerium oxide and p-type oxide.

Promoters, if such are used, are generally incorporated in the washcoat support at concentrations ranging from about 0.05 to about 50% by weight and preferably from about 0.5 to about 25% by weight of the washcoat support.

The quantity of rhodium and second platinum group metal component included in the TWC system depends first on design requirements such as activity and required life and second on economics. Theoretically, the maximum amount of each component is enough to cover the maximum amount of surface available without causing undue metal crystallite growth and loss of activity during use. Thus, with respect to rhodium metal catalysts, several competing phenomena are involved. Large particle size rhodium metal, greater than 100 Ångstroms (10 nm) exhibits less interaction with the alumina support but is more susceptible to loss of activity due to exhaust poisons. Adjacent crystallites of poorly dispersed rhodium are susceptible to sintering which decreases the surface area of the available catalyst with greatly reduced catalyst activity even though interaction with the support is reduced. Smaller particle size rhodium metal, crystallites, e.g. less than 20 Ångstroms diameter tend to interact more strongly with the alumina support reducing catalytic activity. This interaction can be reduced by dispersing the rhodium in such a fashion that the average particle size of the rhodium crystallites is at least about 30 Å (3.0 nm).

Therefore, the initial average particle size of the rhodium compounds with which the support particles are impregnated forms an important feature of rhodium-containing catalysts of the present invention. Generally, the rhodium particles should range from about 20 to about 100 Å in diameter. To obtain high activity maintenance and resistance to poisons, it is advantageous for the initial average particle size to be less than 50 Å. Rhodium particles of about 30 to about 100 Ångstrom units in size, and preferably about 35 to about 80 Ångstrom units diameter are less susceptible to interaction with the alumina support and TWC catalysts prepared using such particle size rhodium exhibit higher catalytic efficiencies. It is especially advantageous to disperse the rhodium in such a fashion that the average particle size is between about 35 and 50 Å so that undesirable interaction with the support is reduced and resistance to poisoning is maintained. The particle size of the second platinum group metal is preferably less than about 25 Ångstroms to ensure high activity and proper dispersion.

As used herein, the weighted average particle size $d_v$ is that determined by chemisorption and for j particles mathematically may be conceptualized as

$$d_v = \frac{\displaystyle\sum_{i=1}^{j} n_i d_i^3}{\displaystyle\sum_{i=1}^{j} n_i d_i^2}$$

The average particle size, $d_n$, is that obtained by analysis of transmission electron micrographs and for j particles may be conceptualized mathematically as

$$d_n = \frac{\displaystyle\sum_{i=1}^{j} n_i d_i}{\displaystyle\sum_{i=1}^{j} n_i}$$

where $n_i$ is the number of particles having a particle size of $d_i$.

To prepare rhodium compounds of a particle size in the range of about 30 to about 100 Ångstrom units containing dispersed alumina particles and a water soluble rhodium compound such as rhodium chloride or rhodium nitrate is prepared in the conventional manner as by commuting the alumina and rhodium compounds admixed with a sufficient amount of liquids, e.g. water, so that the liquid is in a continuous phase in the mixture, i.e. the mixture is a slurry. The comminution is advantageously accomplished in a ball mill or other suitable equipment, the slurry being comprised of about 20 to 55% by weight alumina, 0.05 to about 2.0% by weight of the rhodium compound, with the balance 50 to about 75% by weight water.

The slurry is then treated to fix the rhodium metal on the alumina particles dispersed in the slurry. Fixing may be accomplished in a variety of ways such as by treatment with a gas such as hydrogen sulfide, NaBH₄, hot formic acid, hydrogen at elevated temperature, hydrogen sulfide treatment being preferred.

When hydrogen sulfide is used as the fixing agent, the gas is simply bubbled through the slurry, the amount of hydrogen sulfide being from about 2 to about 30 moles of hydrogen sulfide per mole of rhodium metal treated. Thereafter, the separately impregnated second platinum group alumina particles and/or rare earth particles may be combined with the separately impregnated fixed rhodium/alumina particles to form a washcoat which may be applied to a monolithic support in the manner described herein.

Economics, of course, dictate the use of the least amount of rhodium and second platinum group metal component possible while accomplishing the main objection of reducing pollutants. Further, since the amount of platinum and palladium occurring in many of the currently mined ores is greatly in excess of the amount of the rhodium contain therein, it is desirable to ensure that the rhodium applied to the catalyst is utilized effectively and to minimize the amount of rhodium applied as compared to the more plentiful platinum and palladium. In catalysts of this invention, the combined weight of platinum and palladium present is preferably in excess of twice the weight of rhodium. Preferably, the combined weight of platinum and palladium is at least four times that of rhodium. In the preferred embodiments, the combined weight of the platinum and palladium exceeds that of rhodium by a factor of at least about 5. In the more preferred embodiments, the combined weight of the palladium and platinum exceeds that of rhodium by a factor of at least about 10. Generally, the amount of catalyst metal used is a minor portion of the TWC system and typically does not exceed about 10 weight percent of the support metal exclusive of the substrate. The amount may be about 0.01 to 8% and is preferably about 0.05 to 5% to economically maintain good activity with prolonged use. For use in automobile exhaust converters, the catalyst will generally be comprised of about 15.3mg/cm³ (0.25g/in³) to about 244mg/cm³ (4.0g/in³) alumina, preferably about 30.6mg/cm³ (0.5g/in³) to about 183mg/cm³ (3.0g/in³) alumina, about 1.77g/m³ (0.05g/ft³) to about 883g/m³ (25g/ft³) rhodium, preferably about 3.53g/m³ (0.1g/ft³) to about 530g/m³ (15g/ft³) rhodium and about 17.7g/m³ (0.5g/ft³) to about 5.3kg/m³ (150g/ft³) of the second platinum group metal and preferably about 35.3g/m³ (1g/ft³) to about 3.18kg/m³ (90g/ft³) of the second platinum group metal.

During preparation of the catalyst, various compounds and/or complexes as well as elemental dispersions of any of the rhodium and second platinum group metals may be used to achieve deposition of the metal on the support particles. Water soluble compounds or complexes, as well as organic soluble compounds or complexes, may be used. The only limitation on the liquids to deposit these compounds, complexes, or elemental dispersions is that the liquids should not react unduly with the metal compound and must be capable of being removed from the catalyst by volatilization or decomposition by subsequent heating and/or vacuum. It is not critical whether this removal is accomplished as part of the preparation or during the initial use of the completed catalyst. Suitable compounds are, for example, chloroplatinic acid, potassium platinum chloride, ammonium platinum thiocynate, amine solubilized platinum hydroxide, rhodium chlorides, oxides, sulfides, nitrates, hexamine rhodium chloride and similar soluble decomposable compounds.

If a mixture of platinum and palladium is desired as the second platinum group metal component, the platinum and palladium may be in water soluble form, for example, as amine hydroxides or as chloroplatinic acid and palladium nitrate or palladium chloride, when used in preparing the catalysts of the present invention. Whatever the type of metal compound used during subsequent calcination or use, essentially all of the metal will be converted to the catalytically active form.

The catalyst support materials used in the practice of this invention may contain forms of higher surface area alumina. The higher surface area alumina includes gamma, eta, kappa, theta and delta phases, preferably having surfaces areas over 80m²/g, as distinguished from relatively lower surface boehmite and alpha phase of alumina. Although the maximum amount of rare earth oxide which may be present in the support particles bearing rhodium is difficult to define precisely, it is clear that 1% by weight will lead to undesirable interactions between the rare earth oxide and rhodium. Therefore, the maximum amount of rare earth oxide present in rhodium bearing particles should be less than 1%, preferably less than 0.5%, more preferably less than 0.1% and still more preferably less than 0.01%.

In catalysts of this invention wherein rhodium is a catalyst component, the combined weight of platinum and palladium present may advantageously be in excess of twice the weight of rhodium. Preferably, the combined weight of platinum and palladium is at least four times that of rhodium. In the more preferred embodiments, thecombined weight of the platinum and palladium exceeds that of rhodium by a factor of at least about 5. Generally, the amount of catalyst metal used is a minor portion of the TWC system and typically does not exceed about 10 percent by weight of the alumina support material exclusive of the substrate. The amount of catalyst may be from about 0.01 to 8% by weight and is preferably about 0.05 to 5% by weight of the alumina to economically maintain good activity with prolonged use. For use in automobile exhaust converters, the catalyst will generally be comprised of about 15.3mg/cm³ (0.25g/in³) to about 244mg/cm³ (4.0g/in³) alumina, preferably about 30.6mg/cm³ (0.5g/in³) to about 183mg/cm³ (3.0g/in³) alumina, about 17.7g/m³ (0.5g/ft³) to about 5.3kg/m³ (150g/ft³) of platinum, preferably about 177g/m³ (5g/ft³) to about 3.88kg/m³ (110g/ft³) of platinum, about 17.7g/m³ to about 24.7kg/m³ (about 0.5 to about 700g/ft³) p-type metal oxide, preferably about 53.0g/m³ to about 4.94kg/m³ (about 1.5 to about 140g/ft³) p-type metal oxide and about 0.61 to about 122mg/cm³ (about 0.01 to about 2g/in³) cerium oxide and preferably about 3.05 to about 48.8mg/cm³ (about 0.05 to about 0.8g/in³) of the cerium oxide.

The catalysts of the present invention are particularly suitable for the reduction of hydrocarbon, carbon monoxide, and preferably, nitrogen oxide pollutants in the exhaust gas from an internal combustion engine. In such applications, it has been concluded that a monolithic ceramic support should preferably be used rather than pelleted type supports. The pellets are slow to heat up and after being exposed to high temperatures to cyclic oxidation and reduction conditions, they tend to lose their strength, crumble and break apart. The ceramic monolithic supports, in contrast, heat up quickly and are tough, being able to withstand the severe conditions in the emissions converter. To have good activity, it appears that the surface area of the completed monolithic catalyst should have a minimum of 5m²/g. To achieve this, an aqueous washcoat comprising a mixture of substantially rare earth oxide free alumina particles having rhodium and, optionally platinum and/or palladium dispersed thereupon, the weight of platinum and palladium present being at least twice the weight of the rhodium present, is applied to the monolith by any conventional means such as by immersing the monolith in the slurry. The monolith is then drained of excess slurry and then blown with air to remove excess coating slurry and open any plugged passageways.

The solids content of the slurry forms a deposit on the monolith, and the resulting composite is dried and calcined to provide a catalytically active product. The drying and calcination take place at a temperature low enough to present undue sintering of the mixture. Calcining may be accomplished by the initial use of the TWC or in a separate step which promotes adhesion of the supported metal catalyst to the carrier substrate thus allowing the use of the carrier in high space velocity exhaust gas environments without substantial erosion of the deposited catalyst.

The present invention is illustrated by the Examples which follow:

EXAMPLE I

7

## A. Preparation of P-Type Metal Oxide Modified Ceria Supported Platinum Particles

Two hundred and twenty (220) grams of cerium oxide powder (high purity 99.9% as $CeO_2$), having a surface area of 130 $m^2 g$, was impregnated with an amine solubilized platinum hydroxide ($H_2Pt(OH)_6$) solution. After drying and calcining, a ceria supported platinum powder with 0.5 weight percent platinum metal loading was obtained. In a series of runs individual 30 gram samples of the ceria supported platinum powder were further impregnated with a variety of aqueous base metal nitrate solutions, e.g. nickel nitrate, cobalt nitrate, iron (II) nitrate, manganese nitrate and chromium (III) nitrate. After drying and calcining, various p-type oxide modified platinized ceria composite powders containing 0.3 weight percent base metal, i.e. Ni, Co, Fe, Mn and Cr respectively, were obtained.

## B. Preparation of TWC Catalyst System Using P-Type Metal Oxide Modified Ceria Supported Platinum Particles

### Catalyst A

Thirty (30) grams of the nickel oxide modified platinized ceria powder prepared above and 50.2 grams of gamma alumina powder (stabilized with 0.8 weight percent barium oxide) having a surface area of 130 $m^2 g$ were combined and the admixture further ball milled with water and acetic acid to prepare a slurry. A 3.8 cm (1 1/2″) diameter and 7.6 cm (3″) in length 62 $cell/cm^2$ (400 $cell/in^2$) cordierite monolithic carrier was then dipped into the ball milled slurry to coat it to a coating solid weight of 0.094$g/cm^3$ (1.547$g/in^3$). Excess slurry was blown off by compressed air, the monolith was dried at 125°C to remove water and then calcined at 400°C to yield a finished catalyst having 176$g/m^3$ (5$g/ft^3$) loading of platinum on the monolith.

### Catalyst B

The procedure used to prepare Catalyst A was repeated with the exception that 0.3 weight percent cobalt oxide modified platinized ceria prepared above was substituted for the nickel oxide modified platinized ceria.

### Catalyst C

The procedure used to prepare Catalyst A was repeated, except that the 0.3 weight percent iron oxide modified platinized ceria prepared above was substituted for the nickel oxide modified platinized ceria.

### Catalyst D

The procedure used to prepare Catalyst A was repeated with the exception that the 0.3 weight percent manganese oxide modified platinized ceria prepared above was substituted for the nickel oxide modified platinized ceria.

### Catalyst E

The procedure used to prepare Catalyst A was repeated except that the 0.3 weight percent chromium oxide modified platinized ceria prepared above was substituted for the nickel oxide modified platinized ceria.

For purposes of comparison, the procedure used to prepare Catalyst A was repeated, except that 0.5 weight percent platinum supported on ceria which had not been modified with a p-type metal oxide was combined with alumina to prepare the TWC containing monolithic catalyst. This comparative catalyst was designated "Catalyst $C_1$".

For purposes of further comparison, the procedure used to prepare Catalyst A was repeated, except that 0.5 weight percent platinum supported on gamma alumina (stabilized with 0.8 weight percent barium oxide, surface area 130 $m^2/g$) was substituted for the nickel oxide modified platinized ceria. This second comparative catalyst was designated "Catalyst $C_2$".

Each of the monolithic catalysts prepared in Example I, as well as the comparative Catalysts $C_1$ and $C_2$ prepared above, was mounted in the exhaust system of a laboratory test engine and aged 4 hours using an accelerated aging fuel containing 3.17 mg Pb/l (0.012 gPb/gal) wherein the air-to-fuel ratio was maintained at stoichiometric for 92% of the time with a catalyst inlet temperature of about 610°C and at 0.3 A/F units lean of stoichiometric A/F for 8% of the aging period with an inlet temperature of about 780°C. After aging, the TWC catalysts were evaluated on an engine dynamometer wherein the air-to-fuel ratio employed was fluctuated ± 1.0 A/F units at 1.0 Hz perturbations. The evaluations were at an inlet temperature of 400°C and an exhaust gas flow rate of 80,000 VHSV. The catalytic efficiencies at the above-described conditions are summarized in Table I.

## TABLE I

### CONVERSION EFFICIENCIES OF CATALYSTS A - E AND COMPARATIVE CATALYSTS AT VARIOUS A/F AFTER FOUR HOURS ENGINE AGING

| TWC A/F = 14.55 | | | 14.65 | | | 14.75 | | |
|---|---|---|---|---|---|---|---|---|
| CATALYST HC | CO | NOx | HC | CO | NOx | HC | CO | NOx |
| - Percent Conversion - | | | | | | | | |
| A | 84 | 62 | 43 | 89 | 75 | 44 | 91 | 84 | 43 |
| B | 84 | 61 | 43 | 89 | 74 | 46 | 91 | 85 | 46 |
| C | 75 | 54 | 36 | 82 | 66 | 37 | 85 | 74 | 35 |
| D | 75 | 53 | 37 | 82 | 67 | 38 | 85 | 78 | 38 |
| E | 80 | 58 | 43 | 85 | 71 | 44 | 87 | 82 | 41 |
| $C_1$ | 73 | 50 | 35 | 80 | 63 | 35 | 83 | 69 | 34 |
| $C_2$ | 71 | 46 | 35 | 76 | 53 | 35 | 79 | 59 | 34 |

By reference to the data in Table I, it is immediately apparent that the platinum supported on p-type oxide modified ceria catalysts prepared in accordance with the present invention (Catalysts A-E) exhibit better overall performance than that of the platinum supported on non-modified ceria (Catalyst $C_1$) and substantially superior to that of the platinum supported on alumina particles (Catalyst $C_2$).

EXAMPLE II

A series of platinum containing TWC catalysts were prepared as follows:

Catalyst F

Nine hundred fifty (950) grams cerium powder (95% purity), having a surface area of 130 $m^2/g$, was impregnated with an aqueous nickel nitrate solution containing 50 grams NiO. After drying and calcining at 450°C for 2 hours, a 5 percent by weight nickel oxide modified ceria powder was obtained.

Seventy six and seven tenths (76.7) grams of the nickel oxide modified ceria powder was impregnated with an amine solubilized platinum hydroxide ($H_2Pt(OH)_6$) solution containing 0.74 grams platinum. The wet platinum-ceria-nickel oxide bearing powder was mixed with 153.4 grams gamma alumina powder (stabilized with 0.8 weight percent barium oxide, having a surface area of 130 m²/g) and then ball milled with water and acetic acid to produce a slurry. A 3.8 cm (1 1/2") in diameter and 7.6 cm (3") in length 62 cell/cm² (400 cell/in²) cordierite monolithic carrier was dipped into the ball milled slurry to coat it to a loading of 0.11 g/cm³ (1.8 g/in³). Excess slurry was blown off by compressed air, and the monolith was dried at 125°C to remove water and then calcined at 400°C to yield a finished catalyst having 353 g/m³ (10 g/ft³) loading of platinum on the monolith.

Catalyst G

The procedure used to prepare Catalyst F was repeated, except that the platinum catalyst component was not applied to the ceria nickel oxide composite but instead was applied to 76.7 grams of barium stabilized gamma alumina powder. The ceria nickel oxide composite, the platinum bearing alumina and 76.7 additional grams of barium stabilized gamma alumina were mixed and ball milled to form the washcoat.

For purposes of comparison the procedure of Example II to prepare Catalyst F was repeated with the exception that the cerium oxide powder was not modified with nickel oxide. This comparative TWC catalyst was designated "Catalyst C₃".

For purposes of further comparison, the procedure used to prepare Catalyst F was repeated except that 5 weight percent nickel, as NiO, separated from the ceria surface but physically mixed therewith was substituted for the nickel oxide modified ceria powder. This comparative TWC catalyst was designated "Catalyst C₄".

For purposes of still further comparison, the procedure used to prepare Catalyst G was repeated, except that gamma alumina (stabilized with 0.8 weight percent barium oxide), having a surface area of 130 m²/g, was substituted for the nickel oxide/ceria composite particles. This comparative TWC catalyst was designated "Catalyst C₅".

Each of the catalyst monolith bodies prepared above, after having been thermally aged in a muffle furnace at 750°C for 70 hours in air, was mounted in the simulated exhaust stream of a laboratory test reactor, the exhaust gas containing 0.24% CO, 0.08% $H_2$, 0.27% $O_2$, 300 ppm $C_3H_6$, 500 ppm $N_x$, 10% $CO_2$, 10% $H_2O$, the balance being $N_2$. The temperature of the exhaust gas was 400°C, the flow rate of the exhaust gas was 50,000 VHSV, and the air-to-fuel ratio employed was fluctuated ± 0.5 A/F units at 1.0 Hz perturbations. The efficiencies of the various catalysts prepared above at the above-described conditions are summarized in Table II.

## TABLE II

### CONVERSION EFFICIENCY OF CATALYSTS F-G AND COMPARATIVE CATALYSTS AT STOICHIOMETRIC A/F AFTER 70 HOURS THERMAL AGING AT 750°C IN AIR

| TWC CATALYST | Percent Conversion | | |
|---|---|---|---|
| | HC | CO | NOₓ |
| F | 93 | 80 | 64 |
| G | 86 | 80 | 53 |
| C₃ | 73 | 67 | 38 |
| C₄ | 64 | 67 | 28 |
| C₅ | 1 | 4 | 0 |

By reference to Table II, it is immediately apparent that the presence of a p-type oxide (i.e. NiO) modified ceria composite of this invention either as a support for platinum or a component in the washcoat in combination with a platinum catalyst provides superior catalyst performance (Catalysts F and G).

By way of contrast, if the p-type oxide (i.e. NiO) is not in intimate contact with the ceria, its inclusion does not provide any improvement in efficiency especially when compared to a TWC catalyst in which ceria is a component (compare Catalyst $C_3$ with $C_4$) and such catalysts are substantially inferior both to the catalysts of the present invention and to catalysts containing ceria but no p-type oxide.

By way of further contrast, the extensive thermal treatment in air of an alumina supported platinum TWC catalyst in which NiO modified ceria is absent results in a total deactivation of the catalyst (Catalyst $C_5$).

## EXAMPLE III

Various platinum-rhodium containing TWC systems were prepared in accordance with the present invention as follows:

### Catalyst H

One kilogram of gamma alumina powder (stabilized with 0.8% by weight of barium oxide), having a surface area of 130 mg, was impregnated with an amine solubilized aqueous platinum hydroxide ($H_2Pt(OH)_6$) solution containing 4.82 grams of platinum. The particle size of the platinum containing alumina was reduced by ball milling with water and acetic acid to form a slurry.

In a separate operation, 300 grams of gamma alumina (surface area 130 $m^2/g$) stabilized with 0.8% by weight barium oxide was ball milled with water and acetic acid to form a slurry. The slurry was impregnated with an aqueous rhodium chloride solution containing 1.93 grams of rhodium metal. The rhodium was fixed with hydrogen sulfide at room temperature, the resulting rhodium having a weighted average particle size of 35 to 40 A diameter as determined by CO chemisorption.

In a separate operation, 500 grams of the nickel oxide coated bulk ceria powder prepared in Example II (Catalyst F) was impregnated with an amine solubilized aqueous platinum hydroxide ($H_2Pt(OH)_6$) containing 4.84 grams of platinum. The wet powder was then ball milled to form a slurry and then mixed with the platinum/alumina slurry and the rhodium containing slurry to form a washcoat slurry. A monolithic support of cordierite containing about 62 flow passages per square centimetre (400 flow passages per square inch) of cross-section was dipped into the washcoat slurry. The excess was blown off the monolith by compressed air, and the monolith was dried to remove free water and calcined at 500° C for 20 minutes to provide a 706 $g/m^3$ (20 $g/ft^3$) platinum group metal loading on the monolith with a 5:1 Pt/Rh ratio of platinum to rhodium.

### Catalyst I

The procedure of the Catalyst H was repeated with the exception that the platinum group metal loading on the monolith was 706 $g/m^3$ (20 $g/ft^3$) with a 19:1 ratio of platinum to rhodium.

### Catalyst $C_6$

For purposes of contrast, a comparative TWC catalyst was prepared by substantially following the procedures disclosed in U.S. 3,993,572 and U.S. 4,157,316. Thus, a ceria stabilized alumina support containing 5% by weight ceria was impregnated with solutions of platinum and rhodium salts to co-deposit the metals on the support. After fixation of metal, the impregnated support was ball milled to form a washcoat slurry containing bulk nickel oxide as the oxygen storage component, and the slurry was applied to a 400 cell cordierite monolith. The resultant catalyst contained 589 $g/m^3$ (16.67 $g/ft^3$) of platinum and 118 $g/m^3$ (3.33 $g/ft^3$) of rhodium. The ceria stabilized alumina was present in an amount of 0.092 $g/cm^3$ (1.5 $g/in^3$) and nickel oxide in an amount of 0.018$g/cm^3$ (0.3$g/in^3$) on the catalyst. Cores of 3.8 cm (1 1/2") in diameter and 7.6 cm (3") in length were removed from each of the catalyst monoliths.

In a first series of tests, each of the monolith cores, after having been aged at 900° C for 8 hours in an atmosphere composed of 90% $N_2$ and 10% steam and then aged an additional 24 hours at 800° C in air,

11

was mounted in the simulated exhaust stream of a laboratory test reactor. The temperature of the exhaust gas was 400°C, the flow rate of the exhaust gas was 50,000 VHSV and the air-to-fuel ratio employed was fluctuated ± 0.5 A/F units at 0.5 Hz and 1.0 Hz perturbations. The efficiencies of the various catalysts at the above described conditions are summarized in Table III below.

## TABLE III

## CONVERSION EFFICIENCIES OF AGED Pt/Rh
## CATALYST MONOLITHS
## FIRST SERIES

| TWC CATALYSTS | 1.0Hz | | | | 0.5Hz | |
| --- | --- | --- | --- | --- | --- | --- |
| | HC($C_3H_6$) | CO | $NO_x$ | HC($C_3H_6$) | CO | $NO_x$ |
| Catalyst H | 99 | 74 | 85 | 88 | 58 | 73 |
| Catalyst I | 90 | 64 | 76 | 80 | 51 | 69 |
| Catalyst $C_6$ | 73 | 64 | 66 | 63 | 47 | 57 |

The data recorded in Table III clearly indicate the superior conversion efficiencies after combined hydrothermal and high temperature air aging of the TWC prepared in accordance with the present invention (Catalysts H and I) as compared with a conventional TWC catalyst (Catalyst $C_6$) prepared in a manner outside the scope of the present invention.

In a second series of tests, monolith cores corresponding to Catalysts H, I and $C_6$ as described above, were aged in a muffle furnace in the presence of air at 800°C for 70 hours, then mounted in a simulated exhaust stream of the laboratory test reactor of the type employed in the example above. The temperature of the exhaust gas was 400°C, the flow rate of the exhaust gas was 50,000 VHSV and the air-to-fuel ratio employed was fluctuated ±0.5 A/F units at 0.5 Hz perturbations. The efficiencies of the aged monoliths are summarized in Table IV below.

## TABLE IV

## CONVERSION EFFICIENCIES OF AGED Pt/Rh
## CATALYST MONOLITHS
## SECOND SERIES

| TWC CATALYSTS | 1.0Hz | | | 0.5Hz | | |
| --- | --- | --- | --- | --- | --- | --- |
| | HC | CO | $NO_x$ | HC | CO | $NO_x$ |
| Catalyst H | 97 | 83 | 80 | 86 | 60 | 71 |
| Catalyst I | 94 | 80 | 77 | 83 | 58 | 64 |
| Catalyst $C_6$ | 2 | 16 | 6 | 2 | 12 | 4 |

The data recorded in Table IV show that extensive air exposure (70 hours) at 800°C results in substantially total deactivation of a conventional TWC catalyst (Catalyst C₆), but Catalysts H and I prepared in accordance with the present invention still retain high conversion efficiencies. It is particularly significant that an improved TWC with a substantial reduction of rhodium content (Catalyst I) can be achieved in accordance with the present invention.

While specific components of the present system are defined above, many other variables may be introduced which may in any way affect, enhance, or otherwise improve the system of the present invention. These are intended to be included herein.

Although variations are shown in the present application, many modifications and ramifications will occur to those skilled in the art upon a reading of the present disclosure. These too are intended to be included herein.

## Claims

1. An improved catalyst active at least for oxidation of hydrocarbons and carbon monoxide in a gas stream, said catalyst being of the type having ceria, a platinum group catalyst and a high surface area alumina dispersed on a refractory substrate, wherein the improvement comprises: a p-type oxide being dispersed on said support, in other than bulk form, a substantial portion of said p-type oxide being in intimate contact with said ceria.

2. The catalyst of claim 1 further comprising rhodium dispersed on particles of gamma alumina, a substantial portion of the rhodium being dispersed on particles which are substantially rare earth oxide free.

3. The catalyst of claim 2 wherein said substantial portion of said rhodium is dispersed as crystallites having an initial particle size greater than about 2nm.

4. The catalyst of claim 2 or claim 3 wherein the gamma alumina upon which said substantial portion of the rhodium is dispersed is stabilized with an alkaline earth oxide.

5. The catalyst of claim 4 wherein the alkaline earth oxide is baria.

6. The catalyst of any of claims 3 to 5 wherein the amount of cerium oxide ranges from about 5 to about 30 percent by weight of the catalyst exclusive of the refractory substrate.

7. The catalyst of any of claims 1 to 6 wherein the p-type metal oxide ranges from about 0.1 to about 10 percent by combined weight of the ceria/p-type metal oxide.

8. The catalyst of any of claims 1 to 7 wherein platinum is dispersed on the p-type metal oxide coated cerium oxide composite particles.

9. The catalyst of any of claims 1 to 8 wherein the p-type metal oxide coated cerium oxide composite is dispersed on alumina particles.

10. The catalyst of any of claims 1 to 9 wherein the cerium oxide is present with other rare earth oxides.

11. The catalyst of any of claims 1 to 10 wherein the ceria is bulk ceria.

12. The catalyst of any of claims 1 to 10 wherein the ceria is colloidal ceria.

13. The catalyst of any of claims 1 to 12 wherein the p-type metal oxide is nickel oxide.

14. The catalyst of any of claims 1 to 12 wherein the p-type metal oxide is cobalt oxide.

15. The catalyst of any of claims 1 to 12 wherein the p-type metal oxide is iron oxide.

16. The catalyst of any of claims 1 to 12 wherein the p-type metal oxide is manganese oxide.

17. The catalyst of any of claims 1 to 12 wherein the p-tye metal oxide is chromium oxide.

18. The catalyst of claims 8 wherein the catalyst particles defined therein are dispersed on particles of gamma alumina.

19. The catalyst of any of claims 1 to 18 wherein the platinum group catalyst is platinum.

20. The catalyst of any of claims 1 to 18 wherein the platinum group catalyst is a mixture of platinum and palladium.

21. The catalyst of any of claims 1 to 20 wherein the platinum group catalyst is incorporated therein at a concentration of about 177g/m³ (about 5g/ft³) to about 3.88kg/m³ (about 110g/ft³).

22. The catalyst of any of claims 1 to 21 further comprising particles of substantially rare earth oxide free alumina having rhodium dispersed thereon.

23. The catalyst of any of claims 1 to 22 wherein the crystallite size of the rhodium on said gamma alumina exceeds about 2nm.

24. The catalyst of any of claims 1 to 23 wherein the initial average crystallite size of the rhodium on said gamma alumina is from about 3 to about 8nm as determined by chemisorption,

25. A catalyst active at least for reduction of oxides of nitrogen in a gas stream, said catalyst being of the type having ceria and platinum on a refractory oxide support, wherein the improvement comprises: a p-type oxide being dispersed on said support, in other than bulk form, a substantial portion of said p-type being in intimate contact with said ceria.